# EUROPÄISCHE PATENTSCHRIFT

(11) **EP 4 043 739 B1**
(45) Veröffentlichungstag und Bekanntmachung des Hinweises auf die Patenterteilung: **31.07.2024**
(21) Anmeldenummer: 22150752.8
(22) Anmeldetag: 10.01.2022
(51) Int. Cl.: F16B 25/00, F16B 33/06, F16B 35/04, F16B 43/00, F16B 39/26

(54) **MODULARE SCHRAUBE SOWIE VERFAHREN ZUR HERSTELLUNG EINER MODULAREN SCHRAUBE**
MODULAR SCREW AND METHOD OF MANUFACTURING A MODULAR SCREW
VIS MODULAIRE, AINSI QUE PROCÉDÉ DE FABRICATION D'UNE VIS MODULAIRE

(30) Priorität: 12.02.2021 DE 102021103410
(43) Veröffentlichungstag der Anmeldung: 17.08.2022
(73) Patentinhaber: Illinois Tool Works Inc., Glenview, IL 60025 (US)
(72) Erfinder: Becker, Sven, Glenview, 60025 (US); Da Rocha, Bruno, Glenview, 60025 (US); Jakob, Andreas, Glenview, 60025 (US); Helbert, Stefan, Glenview, 60025 (US); Santos, Nelson, Glenview, 60025 (US)
(74) Vertreter: HGF

(56) Entgegenhaltungen:
- EP-B1- 2 638 299
- CN-U- 204 729 438
- DE-A1- 19 916 989
- US-A- 3 862 458
- US-A- 4 941 787

## Beschreibung

Die vorliegende Erfindung betrifft eine modulare Schraube sowie ein Verfahren zur Herstellung einer modularen Schraube.

Eine Schraube ist ein zylindrischer oder leicht kegeliger (konischer) Körper, in dessen Oberfläche ein Gewinde (eine spiralförmig umlaufende Nut) eingeschnitten oder -gewalzt ist. Bei Schaftschrauben (Schrauben mit Teilgewinde) ist nur ein Teil des Schafts mit einem Gewinde versehen. Gewindewalzen, oftmals auch Gewinderollen genannt, ist eine Variante des Walzens und dient zur Fertigung von Gewinden. Die Umformung beruht auf der Erzeugung von Druckspannungen durch sich auf dem Werkstück abbildende Werkzeuge.

An einem Ende einer Schraube ist in der Regel ein Schraubenkopf angesetzt, an dem sich ein sogenannter Antrieb ausgebildet ist. Der Antrieb besitzt eine spezielle Kontur, über die der Formschluss zum passenden Werkzeug hergestellt wird, meist ein Schraubendreher oder ein Schraubenschlüssel, mit dem die Schraube ein- und ausgedreht werden kann. über eine untere Ringfläche ("Kinn") des Schraubenkopfes erfolgt eine Kraftübertragung auf ein zu befestigendes Bauteil.

Spannscheiben nach sind Federelemente, bspw. in Form einer Tellerfeder, deren Sicherungswirkung ausschließlich auf Kraftschluss beruht. Sie sollen einem Lockern einer Schraubverbindung, wie durch Setzbeträge, entgegenwirken, indem sie durch Federkräfte eine hinreichend hohe Vorspannung in der Verbindung aufrechterhalten.

Unterlegscheiben oder Beilagscheiben sind ringförmige, über einen Schaft einer Schraube stülpbare und meistens aus Metall bestehende Scheiben. "Beigelegt" zwischen Schraubenkopf und dem mit der Schraube zu befestigenden Teil, dient sie dazu, die von der Unterseite des Schraubenkopfes ausgehende Kraft auf eine größere Fläche dieses Teils, dessen Werkstoff meistens weniger fest als der der Schraube ist, zu übertragen.

Wegen ihres größeren Durchmessers bleibt die Unterlegscheibe beim Anziehen der Schraube oder der Mutter auf dem zu befestigten Teil liegen. Das Gleiten findet zwischen ihr und dem Schraubenkopf bzw. der Mutter statt, und die Oberfläche des Teils kann nicht durch Reiben verletzt werden.

Kompressionsbegrenzer sind Metall-Einsätze, die zumeist für die Verwendung in Kunststoff-Formteilen vorgesehen sind. Der Kompressionsbegrenzer widersteht einer Druckkraft, die bei der Montage einer Gegenschraube oder eines Bolzens entsteht. Durch den Einsatz eines Kompressionsbegrenzers werden Schäden an zu befestigenden Bauteilen verhindert. Zudem wird ein Kriechen verhindert und eine Druckkraft in der Verbindung beibehalten.

In der CN 204 729 438 U ist eine Schraube offenbart. Dies Umfasst einen Schraubenkopf und einen daran angeformten Schaft, wobei der Schaft einen gewindefreien Abschnitt und einen Gewindeabschnitt umfasst. In dem gewindefreien Abschnitt ist eine Federscheibe angeordnet, wobei eine Durchgangsöffnung der Federscheibe einen größeren Durchmesser aufweist als der Gewindeabschnitt und insbesondere als der gewindefreie Abschnitt, so dass die Federscheibe im gewindefreien Abschnitt frei drehbar und in Axialrichtung verschiebbar angeordnet ist. Weiterhin ist im gewindefreien Abschnitt eine Beilagscheibe angeordnet, wobei die Beilagscheibe ein Innengewinde aufweist.

Aus der US 3 862 485 A geht ebenfalls eine Schraube hervor. Diese Schraube umfasst einen Schraubenkopf sowie zwei gewindefreie Abschnitte, die über zumindest einen Steg voneinander getrennt sind. An den gewindefreien Abschnitt schließt sich ein Gewindeabschnitt an. In dem gewindefreien Abschnitt ist jeweils beidseitig von dem Steg eine Beilagscheibe angeordnet. Die beiden Beilagscheiben sind in den entsprechenden Abschnitten des gewindefreien Abschnitts in Axialrichtung verschiebbar und frei drehbar angeordnet. Weiterhin ist die erste Beilagscheibe in dem ersten Abschnitt des gewindefreien Abschnitts verliersicher durch den Schraubenkopf und den Steg gehalten und die zweite Beilagscheibe ist in dem zweiten Abschnitt des gewindefreien Abschnitts durch den Steg und den Gewindeabschnitt verliersicher gehalten.

In der DE 199 16 989 A1 ist ein definiert spannbares elastisches Spannelement bzw. eine Schraube offenbart. Diese Schraube umfasst einen Schraubenkopf und einen daran angeformten gewindefreien Abschnitt sowie einen Gewindeabschnitt, wobei im gewindefreien Abschnitt eine Tellerfeder angeordnet ist, die mit einem Schaft der Schraube beispielsweise über entsprechende Stege und/oder Arme in Axialrichtung ortsfest festgelegt ist. Weiterhin ist die Tellerfeder nicht drehbar bezüglich einer sich in Axialrichtung erstreckenden Längsachse der Schraube gelagert.

Aus der EP 2 638 299 B1 geht eine Schraube hervor, die einen Schraubenkopf umfasst, an dem ein Vorspannabschnitt angeordnet ist, wobei sich an den Vorspannabschnitt mit erweitertem Durchmesser ein Gewindeabschnitt anschließt. Zudem ist im Vorspannabschnitt eine Tellerfeder angeordnet.

In der US 4 941 787 A ist eine Schraube beschrieben. Diese Schraube umfasst einen Schraubenkopf mit einem sich konisch verjüngenden Abschnitt, an den sich ein zylindrischer Abschnitt anschließt, wobei dieser zylindrische Abschnitt in einen Gewindeabschnitt übergeht. In dem sich konisch verjüngenden Abschnitt ist eine gewellte Beilagscheibe bzw. eine Federscheibe bzw. eine Spannscheibe oder eine entsprechende Spannscheibenanordnung, umfassend zumindest zwei gewellte Beilagscheiben sowie eine normale Beilagscheibe 26a, angeordnet.

Aufgabe der vorliegenden Erfindung ist es, eine modulare Schraube bereitzustellen, die einfach und flexibel an unterschiedliche mechanische Anforderungen und Verwendungszwecke anpassbar ist.

Eine weitere Aufgabe der vorliegenden Erfindung besteht darin, eine modulare Schraube vorzusehen, die zwei oder mehre technische Funktionen erfüllt.

Insbesondere besteht eine Aufgabe der vorliegenden Erfindung darin, eine modulare Schraube vorzusehen, die bei einem vorbestimmten Anzugsmoment eine höhere Vorspannkraft ermöglicht.

Zudem ist es eine Aufgabe der vorliegenden Erfindung, eine alternative modulare Schraube auszubilden, die eine Spannscheibe, ein Kompressionsbegrenzungsabschnitt und/oder eine Unterlegscheibe aufweist.

Weiterhin besteht eine Aufgabe der vorliegenden Erfindung darin eine modulare Schraube vorzusehen, die einfach und kostengünstig herstellbar ist.

Eine weitere Aufgabe ist es ein entsprechendes Verfahren zum kostengünstigen und einfachen Herstellen einer modularen Schraube vorzusehen.

Die Erfindung besteht in einer Schraube gemäß Anspruch 1. Vorteilhafte Ausgestaltungen sind in den davon abhängigen Unteransprüchen angegeben.

Erfindungsgemäß ist eine modulare Schraube vorgesehen, wobei die Schraube in einer Axialrichtung die Folgenden Elemente umfasst einen Schraubenkopf, einen Schaft mit einem zweiten Funktionsabschnitt, einem dritten Funktionsabschnitt, zum Verteilen einer Vorspannkraft, wobei im zweiten Funktionsabschnitt eine Unterlegscheibe angeordnet ist, die um eine Längsachse der Schraube drehbar gelagert ist, und einem vierten Funktionsabschnitt mit einem Außengewinde und wobei die Unterlegscheibe in Axialrichtung durch Anlage an dem zweiten und dem vierten Funktionsabschnitt in etwa ortsfest festgelegt.

Eine solche Schraube weist dann drei Abschnitte auf, den zweiten, den dritten und den vierten Funktionsabschnitt.

Dadurch, dass die modulare Schraube einen dritten Funktionsabschnitt zum Verteilen einer Vorspannkraft aufweist, wobei im dritten Funktionsabschnitt eine Unterlegscheibe angeordnet ist, die um eine Längsachse der Schraube drehbar gelagert ist, und wobei die Unterlegscheibe in Axialrichtung durch Anlage an dem zweiten und dem vierten Funktionsabschnitt in etwa ortsfest festgelegt bzw. gelagert ist, wird eine modulare Schraube ausgebildet, bei der die Unterlegscheibe eine Bauteiloberfläche kontaktiert und die sich während des Festziehens nur geringfügig oder gar nicht mitdreht. Der dritte Funktionsabschnitt bildet somit einen Kraftverteilungsabschnitt aus.

Auf diese Weise wird ein verbesserter Befestigungsvorgang bereitgestellt, da nur geringe bzw. keine Reibungskräfte zwischen der drehbar gelagerten Unterlegscheibe und einer entsprechenden Bauteilfläche auftreten. Auf diese Weise ist eine höhere Vorspannkraft mittels der Schraube aufbringbar, wobei gleichzeitig ein gleiches oder geringeres Anzugsmoment im Vergleich zu bekannten Schraubverbindungen nötig ist. Gemäß einem ersten Aspekt der vorliegenden Erfindung ist eine modulare Schrauben mit Unterlegscheibe vorgesehen.

Aus dem Stand der Technik bekannte Schrauben haben zu diesem Zweck zumeist einen vergrößerten Radius bzw. einen radial umlaufenden Kragen anstelle der Unterlegscheibe, um eine entsprechende Schulter zum Anliegen an einer Bauteiloberfläche auszubilden.

Weiterhin können mittels der erfindungsgemäßen modularen Schraube Unterlegscheiben mit unterschiedlichem Durchmesser verwendet werden. Auf diese Weise lässt sich eine Auflagefläche vergrößern und die Schraube ist auf einfache Weise an unterschiedliche mechanische Anforderungen anpassbar.

Die Anlage der Unterlegscheibe in Axialrichtung an dem zweiten und dem vierten Funktionsabschnitt erfolgt durch entsprechende Anlageabschnitte des zweiten und des vierten Funktionsabschnittes, die einen größeren Durchmesse aufweisen als eine Durchgangsöffnung der Unterlegscheibe, sodass die Unterlegscheiben in gegen eine Verschiebung in Axialrichtung in etwa ortsfest festgelegt bzw. gelagert ist.

Auf diese Weise wird eine Verliersicherung für die Unterlegscheibe ausgebildet, da diese dann verliersicher durch die Anlageabschnitte des zweiten und des Vierten Funktionsabschnittes gehalten wird.

Zudem ermöglicht die Unterlegscheibe eine Vormontage in einer Durchgangsöffnung eines zu montierenden Bauteils. Das Bauteil weist dann eine Durchgangsöffnung auf, wobei in der Durchgangsöffnung bspw. drei radial umlaufend und gleichbeabstandet voneinander angeordnete Rastmittel bzw. Kanten vorgesehen sind, die sich in radialer Richtung nach innen erstrecken und die Unterlegscheibe hintergreifen. Somit ist die modulare Schraube dann vormontiert und/oder verliersicher in dem Bauteil angeordnet.

In einem ersten Funktionsabschnitt zwischen dem Schraubenkopf und dem zweiten Funktionsabschnitt ist eine Spannscheibe angeordnet, wobei die Spannscheibe vorzugsweise als Tellerfeder ausgebildet ist und mit dem Schaft ortsfest verbunden und festgelegt ist.

Gemäß der Erfindung ist eine modulare Schrauben mit Unterlegscheibe und Spannscheibe vorgesehen.

Eine solche Schraube weist dann vier Abschnitte auf, den ersten, den zweiten, den dritten und den vierten Funktionsabschnitt.

Dadurch, dass die Schraube eine Spannscheibe aufweist, deren Sicherungswirkung ausschließlich auf Kraftschluss beruht, wirkt der erste Funktionsabschnitt einem Lockern einer Schraubverbindung, wie durch Setzbeträge, entgegen, indem die Spannscheibe durch Federkräfte eine ausreichend hohe Vorspannung in der Verbindung aufrechterhält. Der erste Funktionsabschnitt wird daher als Vorspannabschnitt bezeichnet.

Die Spannscheibe ist vorzugsweise um die Längsachse frei drehbar. Eine Bewegung der Spannscheibe in und entgegen der Axialrichtung wird durch den Schraubenkopf und die Unterlegscheibe begrenzt. Die Spannscheibe ist somit verliersicher mit dem Schraubenschaft verbunden bzw. die Unterlegscheibe bildet in Verbindung mit dem Schraubenkopf eine Verliersicherung für die Spanscheibe aus.

Zudem können mittels der erfindungsgemäßen modularen Schraube Spannscheiben mit unterschiedlicher Federkennlinie verwendet werden. Auf diese Weise ist die Schraube auf einfache Weise an unterschiedliche mechanische Anforderungen anpassbar.

Mit den aus dem Stand der Technik bekannten Befestigungsmitteln kann meist eine nicht ausreichende Vorspannkraft aufgebracht werden.

Bei der erfindungsgemäßen modularen Schraube hingegen kann der vierte Funktionsabschnitt mit dem Außengewinde ausreichend stark dimensioniert werden, um eine gewünschte Vorspannkraft bereitzustellen, wohingegen die Spannscheibe beliebig ausgelegt werden kann, beispielsweise bei Verwendung einer geringen Materialstärke, um eine weiche Federkennlinie auszubilden. Der vierte Funktionsabschnitt bildet somit einen Gewindeabschnitt aus.

Auf diese Weise können vorbestimmte Anforderungen an die Vorspannkraft erfüllt werden. Gleichzeitig ist bei der erfindungsgemäßen modularen Schraube ein geringeres bzw. ein gleiches Anzugsmoment, wie bei aus dem Stand der Technik bekannten Befestigungsmitteln notwendig.

Der zweite Funktionsabschnitt kann ein Kompressionsbegrenzungsabschnitt sein, dessen Durchmesser vorzugsweise größer als ein Durchmesser des Außengewindes ist.

Dadurch, dass der zweite Funktionsabschnitt als Kompressionsbegrenzungsabschnitt ausgebildet ist, wird ein Kriechen verhindert und eine Druckkraft in einer Verbindung wird konstant beibehalten. Zudem werden Schäden am zu befestigenden Bauteil sicher und zuverlässig verhindert.

Im Stand der Technik werden Spannfedern zusammen mit einer Hülse als ein einziges Bauteil, bspw. mittels Tiefziehen ausgebildet. Hülse und Spannfeder weisen daher die gleiche Materialstärke auf. Die Hülse kann dabei als Kompressionsbegrenzungsmittel ausgeführt sein.

Häufig ist jedoch eine stabile Hülse und eine Spannfeder mit geringer bzw. reduzierter Vorspannkraft, bspw. zur Montage von Kunststoff und/oder Verbundbauteilen (z.B. Motorabdeckung), erwünscht, um diese nicht zu beschädigen.

Bei der vorliegenden Erfindung ist der Kompressionsbegrenzungsabschnitt unabhängig von der Spannscheibe ausgeführt. Daher können bspw. zur Befestigung von Kunststoff- und/oder Verbundbauteilen dünnwandige Spannfedern mit einer weichen Federkennlinie verwendet werden. Auf diese Weise ist die modulare Schraube auf einfache Weise an bestimmte Anforderungen anpassbar.

Durch Vorsehen eines oder mehrerer der vorstehend aufgezeigten technischen Merkmale der vorliegenden Erfindung, wird eine modulare Schraube bereitgestellt, die drei Teile umfasst, nämlich die Schraube selbst, die Spannscheibe und die Unterlegscheibe. Dadurch, dass die modulare Schraube aus diesen drei Bauteilen ausgebildet ist, können Spannscheiben mit unterschiedlichen Federkennlinien verwendet werden.

Obwohl die modulare Schraube mit Spannscheibe und Unterlegscheibe vollständig vormontiert ist, ist die Unterlegscheibe dennoch frei drehbar, so dass es zu geringeren Reibungskräften beim Festziehen der Schraube kommt, da die Unterlegscheibe beim Festschrauben nicht mitdreht und daher keine bzw. nur geringe Reibungskräfte zwischen einer Bauteiloberfläche und der Spannscheibe auftreten.

Der Schraubenkopf kann einen entsprechenden Antrieb aufweisen, wobei die Art des Antriebs (bspw. Schlitz-, Kreuzschlitz-, Inbus-, Torx-, Außensechskantantrieb) beliebig an die gewünschten Anforderungen anpassbar ist. Gleiches gilt für eine entsprechende Schraubenlänge, eine Klemmlänge, einen Durchmesser der Unterlegscheibe, eine Federkennlinie und/oder einen Durchmesser der Spannscheibe sowie eine Dimensionierung des Kompressionsbegrenzungsabschnittes.

Die Unterlegscheibe kann einen größeren Durchmesser aufweisen als der zweite Funktionsabschnitt.

Eine Länge des Kompressionsbegrenzungsabschnitts und des dritten Funktionsabschnitts kann in axialer Richtung kleiner einer Höhe einer Durchgangsöffnung eines Bauteils in axialer Richtung sein, in dem die Schraube anordbar ist. Auf diese Weise wird eine vorbestimmte Flächenpressung eines zu befestigenden Bauteils nicht überschritten. Insbesondere werden dadurch Beschädigungen bei Kunststoff- und/oder Verbundbauteilen durch ein entsprechendes Anzugsmoment vermieden.

Gemäß einem weiteren Aspekt der vorliegenden Erfindung kann eine erfindungsgemäße modulare Schraube durch
Pressen des Schraubenkopfes und des Schaftes in einer Pressmaschine,
Aufbringen von Unterlegscheibe und/oder Spannscheibe auf den Schaft vorzugsweise in einer Walzmaschine, und
Walzen des Außengewindes in der Walzmaschine hergestellt sein.

Ggfs. Kann ein weiterer Schritt des Wärmebehandeln und/oder Beschichten der modularen Schraube erfolgen.

Zumeist wird eine Schraube durch Pressen und Walzen hergestellt. Diese wird dann ggfs. gehärtet und beschichtet. Parallel dazu wird einen entsprechende Scheibe hergestellt, die dann ebenfalls gehärtet und beschichtet wird. Anschließend werden Schraube und Scheibe in einem Schritt miteinander verbunden bzw. die Scheibe auf die Schraube montiert.

Bei der vorliegenden Erfindung hingegen wird zunächst ein Rohling der Schraube umfassend den Schraubenkopf und den Schaft mittels Pressen in der Pressmaschine hergestellt. Anschließend werden ungehärtete und unbeschichtete Scheiben und die Rohlinge der Walzmaschine zugeführt. Die Zuführung kann jeweils über entsprechende Zuführeinrichtungen, wie z.B. einen Verteilertopf oder eine Zuführschiene oder dergleichen erfolgen.

In der Walzmaschine werden dann in einem Bereich vor entsprechenden Walzbacken zum Gewindewalzen die Spann- und/oder die Unterlegscheibe auf den Schaft aufgebracht. Danach wird das Außengewinde mittels der Walzbacken in der Walzmaschine gewalzt bzw. hergestellt.

Daraufhin können die Schraube und die Scheibe/-n gemeinsam gehärtet und beschichtet werden, um die modulare Schraube auszubilden.

Gegenüber bekannte derartigen Verfahren und Vorrichtungen entfallen dann ein oder mehrere Prozessschritte, wie bspw. eine separate Montage einer Scheibe auf der Schraube und/oder ein Härten und/oder separates Beschichten der Scheibe.

Somit wird erfindungsgemäß eine wirtschaftlichere Fertigung bereitgestellt auch dadurch gekennzeichnet, das einzelne Prozessschritte wie das Härten sowie Beschichten nun zusammen möglich sind.

Derartige aus dem Stand der Technik bekannte Befestigungsmittel verwenden in der Regel tiefgezogene und gestanzte Spannscheiben, die teure Werkzeuge erfordern und hohe Herstellungskosten verursachen. Spann- und oder Unterlegscheiben werden separat hergestellt und behandelt und in einem separaten Fertigungsschritt mit einer Schraube verbunden bzw. auf diese aufgebracht.

Dadurch, dass bei der vorliegenden Erfindung die Spannscheibe und/oder die Unterlegscheibe in einer Walzmaschine unmittelbar vor dem Gewindewalzen zugeführt werden, kann die erfindungsgemäße modulare Schraube durch vergleichsweise einfache Herstellungsverfahren wie Walzen, Schneiden und Biegen der Metallteile hergestellt werden, für die einfachere Werkzeuge verwendet werden können und geringere Herstellungskosten anfallen.

Weiterhin ist bei den aus dem Stand der Technik bekannten Befestigungsmitteln ein kostenintensiver Montageprozess für Schrauben mit Spannscheiben notwendig, die komplexe Maschinen erfordert. Bei der erfindungsgemäßen modularen Schraube hingegen ist der Montageprozess stark vereinfacht, da die Spannscheibe und/oder die Unterlegscheibe bei dem ohnehin notwendigen Walzprozess der Schraube und des Gewindes in einem Zwischenschritt hergestellt werden. Das bedeutet, das Ausgangsmaterial für die Scheiben wird der Walzmaschine zugeführt und während des Walzvorgangs montiert.

Zudem ist bei derartigen Befestigungsmitteln aus dem Stand der Technik vorgesehen, dass die einzelnen Komponenten (Schraube, Spann- und/oder Unterlegscheibe) separat wärmebehandelt und beschichtet werden, insbesondere erfolgt die Wärmebehandlung und die Beschichtung der Schraubenschäfte und der Scheiben unabhängig voneinander. Zumeist erfolgt dann ein weiterer Beschichtungsprozess nachdem die Schraube montiert wurde. Bei der vorliegenden modularen Schraube hingegen, kann ist ein gemeinsamer Beschichtungsvorgang und eine gemeinsame Wärmebehandlung vorgesehen sein, um die modulare Schraube auszubilden.

Das bedeutet die einzelnen Komponenten (Schraube, Spann- und/oder Unterlegscheibe) der modularen Schraube werden zeitgleich beschichtet, jedoch können der Beschichtungsvorgang und/oder die Wärmebehandlung, je nach Anforderung, auch zwei oder mehr Schritte umfassen, z.B. wenn die Komponenten verzinkt werden sollen und zusätzlich eine KTL-Deckschicht (schwarze Einfärbung) bekommen sollen. Gemäß der vorliegenden Erfindung können diese Schritte jedoch immer in einem einzigen Arbeitsgang gleichzeitig für alle Komponenten der modularen Schraube ausgeführt werden.

Die Schraube, die Unterlegscheibe und/oder die Spannscheibe können sowohl aus Kunststoff, als auch aus einem metallischen Werkstoff oder in Kombinationen davon ausgebildet sein. Das Design bzw. die Form und Geometrie sowie die Materialeigenschaften sind somit beliebig an die gewünschten Anforderungen anpassbar. Vorzugsweise ist vorgesehen, dass die Spannscheibe und/oder die Unterlegscheibe aus einem metallischen Werkstoff ausgebildet sind.

Gemäß einem weiteren Aspekt der vorliegenden Erfindung kann eine modulare Schraube vorgesehen sein, wobei die Schraube in einer Axialrichtung die Folgenden Elemente umfasst einen Schraubenkopf, einen Schaft mit einem ersten Funktionsabschnitt, zum Aufbringen einer Vorspannkraft, wobei im ersten Funktionsabschnitt benachbart zum Schraubenkopf eine Spannscheibe angeordnet ist, wobei die Spannscheibe vorzugsweise als Tellerfeder ausgebildet ist und mit dem Schaft ortsfest verbunden und festgelegt ist, einem zweiten Funktionsabschnitt, und einem vierten Funktionsabschnitt mit einem Außengewinde.

Eine solche Schraube weist dann drei Abschnitte auf, den ersten, den zweiten und den vierten Funktionsabschnitt.

Gemäß diesem Aspekt kann die Spannscheibe gemäß obigen Ausführungen mit dem Schraubenschaft verbunden sein.

Insbesondere kann gemäß diesem Aspekt der vorliegenden Erfindung die Spannscheibe ein Verbindungsmittel aufweisen über das die Spannscheibe mittels Reib- und oder Formschluss ortsfest mit dem Schaft verbunden ist, wobei das Verbindungsmittel, zum Bereitstellen einer reibschlüssigen Verbindung ausgebildet ist.

Dadurch, dass die Spannscheibe ein Verbindungsmittel aufweist über das die Spannscheibe mittels Reib- und/oder Formschluss ortsfest mit dem Schaft verbunden ist, wobei das Verbindungsmittel zum Bereitstellen einer reibschlüssigen Verbindung ausgebildet ist, kann eine modulare Schraube mit Spannschrauben mit unterschiedlichen Federkennlinien auf einfache Weise bereitgestellt werden und beliebig an entsprechende mechanischen Anforderungen angepasst werden. Eine derartige modulare Schraube ist wesentlich kostengünstiger herstellbar als aus dem Stand der Technik bekannte Befestigungsmittel.

Die Spannscheibe kann eine Durchgangsöffnung aufweisen, wobei das Verbindungsmittel als sich von einem Rand der Durchgangsöffnung in radialer Richtung nach innen in Richtung Längsachse gerichtete Laschen mit Haltekanten ausgebildet ist.

Vorzugsweise können drei, vier, fünf oder mehr radial umlaufend und gleich beabstandet voneinander angeordnete Laschen vorgesehen sein.

Eine Spannscheibe mit einem entsprechenden Verbindungsmittel bietet den Vorteil, dass die Geometrie, die Materialdicke, die Materialqualität und/oder eine Wärmebehandlung beliebig an die gewünschten mechanischen Anforderungen der Spannscheibe angepasst werden kann.

Aus dem Stand der Technik bekannte tiefgezogene Metallstanzteile erfordern teure Werkzeuge und hohe Produktionskosten. Bei der erfindungsgemäßen modularen Schraube sind nur einfache Schneid- und Biegevorgänge der Metallteile notwendig, die einfachere Werkzeuge benötigen und geringere Herstellungskosten verursachen.

Zu den hohen Herstellungskosten bei aus dem Stand der Technik bekannten Befestigungsmitteln insbesondere bei Schrauben mit Spannscheiben ist der Zusammenbau von Schraube und Spannteil ein wesentlicher Faktor, da dieser komplexe und aufwendige Maschinen bzw. Werkzeuge erfordert. Dadurch, dass bei der erfindungsgemäßen modularen Schraube Verbindungsmittel vorgesehen sind, wird der Montageprozess der Spannscheibe erheblich vereinfacht.

Weiterhin werden bei aus dem Stand der Technik bekannten Befestigungsmitteln die Schrauben und die Spannscheiben einzeln beschichtet, wobei nach der Montage zumeist eine weitere Beschichtung erfolgt. Im Gegensatz dazu genügt es bei der erfindungsgemäßen modularen Schraube, da dabei die Spannscheibe über das Verbindungsmittel mit der Schraube verbunden ist, einen einzigen Beschichtungsvorgang.

Eine erfindungsgemäße Schraube, wobei die technischen Merkmale der vorstehend aufgezeigten Ausführungsformen beliebig miteinander kombinierbar sind weist somit eine höchstmöglich Modularität hinsichtlich der technischen Anforderungen an die Schraube auf, in dem entsprechende Funktionsabschnitte vorgesehen sind und die entsprechenden technischen Merkmale je nach Anforderung miteinander kombinierbar sind.

Die modulare Schraube kann bspw. zum Befestigen folgender Bauteile vorgesehen sein: Verkleidungsteile von Kraftfahrzeugen, bspw. Stoßstangen oder Unterbodenverkleidung, Motorabdeckung, Abdeckung Türschweller oder Radkästen, Verkleidungsteile, bspw. Türen, Innenraum oder Kofferraumklappe, Befestigung Antennen, Luftkanäle, Kühlergrill, Kunststoffverkleidungen im Allgemeinen, Befestigung Stromschienen (Kupfermaterial). Ventilhauben, Ölwannen sowie ähnliche Applikationen im Bereich Powertrain

Weiterhin ist erfindungsgemäß ein Verfahren zum Herstellen einer modularen Schraube gemäß Anspruch 1.

Gemäß einem weiteren Aspekt der vorliegenden Erfindung kann eine erfindungsgemäße modulare Schraube durch
Pressen des Schraubenkopfes und des Schaftes in einer Pressmaschine,
Aufbringen von Unterlegscheibe und/oder Spannscheibe auf den Schaft vorzugsweise in einer Walzmaschine, und
Walzen des Außengewindes in der Walzmaschine hergestellt sein.

Ggfs. Kann ein weiterer Schritt des Wärmebehandeln und/oder Beschichten der modularen Schraube erfolgen.

Auf diese Weise ist eine erfindungsgemäße modulare Schraube herstellbar, bei der nicht zwei Bauteile zum Herstellen miteinander gekoppelt bzw. verbunden werden müssen. Dies geschieht in einem einzigen Zwischenschritt während des Walzvorgangs. Zudem müssen Spannscheibe und/oder Unterlegscheibe und Schraube nicht separat beschichtet und/oder wärmebehandelt werden, sondern dies erfolgt in einem einzigen Herstellungsschritt.

Die weiteren Vorteile eines erfindungsgemäßen Verfahrens zur Herstellung einer modularen Schraube wurden bereits vorstehend anhand der verschiedenen Aspekte der vorliegenden Erfindung dargelegt.

Die technischen Merkmale der verschiedenen Aspekte der vorliegenden Erfindung sind, sofern technisch möglich, beliebig miteinander kombinierbar. Dies macht auch die Modularität und Flexibilität der modularen Schraube aus.

Die vorliegende Erfindung wird im Folgenden anhand von mehreren Ausführungsbeispielen näher beschrieben. Diese zeigen in:
- Figur 1: eine perspektivische Darstellung einer modularen Schraube gemäß einem ersten Ausführungsbeispiel,
- Figur 2: eine weitere perspektivische Darstellung der modularen Schraube,
- Figur 3: eine Seitenansicht der modularen Schraube,
- Figur 4: eine teilweise freigeschnittene Seitenansicht der modularen Schraube,
- Figur 5: eine Seitenansicht eines Schraubenkopfs und eines Schaftes der modularen Schraube,
- Figur 6: eine perspektivische Darstellung des Schraubenkopfes und des Schaftes der modularen Schraube,
- Figur 7: eine perspektivische Darstellung einer Spannscheibe der modularen Schraube,
- Figur 8: eine seitlich geschnittene Darstellung der Spannscheibe,
- Figur 9: eine Draufsicht auf die Spannscheibe,
- Figur 10: eine perspektivische Darstellung einer Unterlegscheibe der modularen Schraube,
- Figur 11: eine seitlich geschnittene Darstellung der Unterlegscheibe, und
- Figur 12: eine Draufsicht auf die Unterlegscheibe,
- Figur 13: eine perspektivische Darstellung einer modularen Schraube gemäß einem zweiten Ausführungsbeispiel, das nicht zur Erfindung gehört,
- Figur 14: eine Seitenansicht der modularen Schraube,
- Figur 15: eine Seitenansicht eines Schraubenkopfs und eines Schaftes der modularen Schraube,
- Figur 16: eine perspektivische Darstellung einer Unterlegscheibe,
- Figur 17: eine perspektivische Darstellung einer modularen Schraube gemäß einem dritten Ausführungsbeispiel,
- Figur 18: eine teilweise geschnittene Seitenansicht der modularen Schraube,
- Figur 19: eine weitere perspektivische Darstellung der modularen Schraube,
- Figur 20: eine Detailansicht der modularen Schraube aus Figur 19,
- Figur 21: eine perspektivische Darstellung einer Spannscheibe mit Verbindungsmitteln,
- Figur 22: eine seitlich geschnittene Darstellung der Spannscheibe,
- Figur 23: eine Draufsicht auf die Spannscheibe,
- Figur 24: ein Schraubenkopf und ein Schaft der Schraube, und
- Figur 25: eine perspektivische Darstellung des Schraubenkopfes und der modularen Schraube.

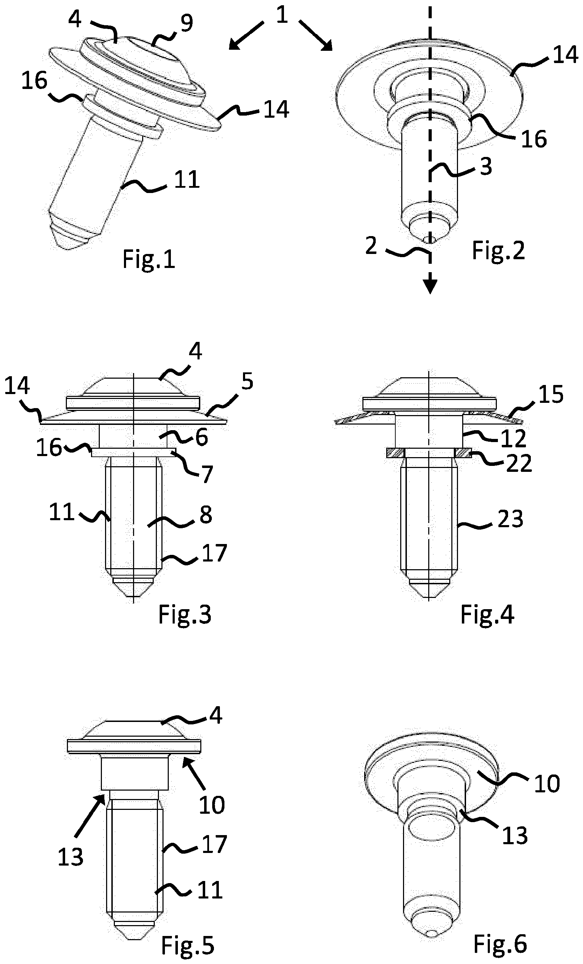

Im Folgenden wird eine erfindungsgemäße modulare Schraube 1 anhand eines ersten Ausführungsbeispiels näher beschrieben (Figuren 1 bis 12).

Die modulare Schraube 1 weist entlang einer sich in Axialrichtung 2 erstreckenden Längsachse 3 einen Schraubenkopf 4, einen ersten Funktionsabschnitt 5, einen zweiten Funktionsabschnitt 6, einen dritten Funktionsabschnitt 7 und einen vierten Funktionsabschnitt 8 auf.

Am Schraubenkopf 4 ist ein beliebiger Antrieb 9 ausgebildet. Als Antrieb 9 kann ein Innen- oder Außensechskant, eine Schlitz- oder Kreuzschlitzverbindung oder ein Torx vorgesehen sein.

An einer dem Antrieb 9 gegenüberliegenden Seite weist der Schraubenkopf 4 eine sich quer zur Axialrichtung erstreckende Anschlagfläche 10 auf.

Benachbart zur Anschlagfläche 10 ist im ersten Funktionsabschnitt 5 eine Spannscheibe, vorzugsweise eine Tellerfeder, zum Erzeugen einer Vorspannung angeordnet. Die Tellerfeder ist in Axialrichtung ortsfest mit einem sich in Axialrichtung erstreckenden Schraubenschaft 11 verbunden.

Die Spannscheibe 14 ist vorzugsweise als Tellerfeder ausgebildet und weist eine Durchgangsöffnung 19 auf.

Der erste Funktionsabschnitt 5 mit der Spannscheibe 14 bildet einen Vorspannabschnitt 15 aus.

Benachbart zum ersten Funktionsabschnitt ist in Axialrichtung 2 der zweite Funktionsabschnitt 6 in Form eines Kompressionsbegrenzungsabschnittes 12 vorgesehen. Der Kompressionsbegrenzungsabschnitt 12 ist in etwa zylindrisch ausgebildet. Er kann jedoch auch in Axialrichtung 2 kegelförmig aufweitend oder sich konusförmig verjüngend ausgebildet sein.

Benachbart zum dritten Funktionsabschnitt 7 weist der Kompressionsbegrenzungsabschnitt 12 eine sich quer zur Axialrichtung erstreckende Anschlagfläche 13 auf.

Eine Höhe des Kompressionsbegrenzungsabschnitts 12 ist in axialer Richtung 2 kleiner einer Höhe einer Durchgangsöffnung eines Bauteils, in dem der erste und der zweite Funktionsabschnitt 5, 6, 12, 15 anordbar sind.

Im dritten Funktionsabschnitt 7 ist eine Unterlegscheibe 16 um die Längsachse 3 drehbar mit dem Schraubenschaft 11 verbunden bzw. an diesem gelagert und in Axialrichtung 2 ortsfest festgelegt.

Die ortsfeste Festlegung in Axialrichtung der Unterlegscheibe 16 erfolgt dadurch, dass die Unterlegscheibe in Axialrichtung 2 durch Anlage an der Anschlagfläche 13 zweiten und einer Kante des vierten Funktionsabschnitt in etwa ortsfest festgelegt ist.

Die Unterlegscheibe 16 weist eine Durchgangsöffnung 25 auf.

Der dritte Funktionsabschnitt 7 mit der Unterlegscheibe 16 bildet einen Kraftverteilungsabschnitt 22 aus.

Im vierten Funktionsabschnitt 8 ist an einer äußeren Mantelwandung des Schraubenschaftes 11 ein Außengewinde 17 ausgebildet.

Der vierte Funktionsabschnitt 8 mit dem Außengewinde 17 bildet einen Gewindeabschnitt 23 aus.

Ein Verfahren zum Herstellen einer modularen Schraube,
umfasst die Folgenden Schritte
Pressen eines Schraubenkopfes und eines Schaftes in einer Pressmaschine,
Aufbringen einer Spann und/oder einer Unterlegscheibe in einer Walzmaschine, und
Walzen eines Außengewindes in der Walzmaschine, und
ggfs. Wärmebehandeln und/oder Beschichten der modularen Schraube.

Bei der vorliegenden Erfindung hingegen wird somit zunächst ein Rohling der Schraube umfassend den Schraubenkopf und den Schaft mittels Pressen in der Pressmaschine hergestellt. Anschließend werden ungehärtete und unbeschichtete Scheiben und die Rohlinge der Walzmaschine zugeführt. Die Zuführung kann jeweils über entsprechende Zuführeinrichtungen, wie z.B. einen Verteilertopf oder eine Zuführschiene oder dergleichen erfolgen.

In der Walzmaschine werden dann in einem Bereich vor entsprechenden Walzbacken zum Gewindewalzen die Spann- und/oder die Unterlegscheibe auf den Schaft aufgebracht. Danach wird das Außengewinde mittels der Walzbacken in der Walzmaschine gewalzt bzw. hergestellt.

Daraufhin können die Schraube und die Scheibe/-n gemeinsam gehärtet und beschichtet werden, um die modulare Schraube auszubilden.

Dementsprechend kann erfindungsgemäß auch eine entsprechende Vorrichtung zur Herstellung einer modularen Schraube vorgesehen sein, die die vorstehend aufgezeigte Press- und Walzmaschine umfasst.

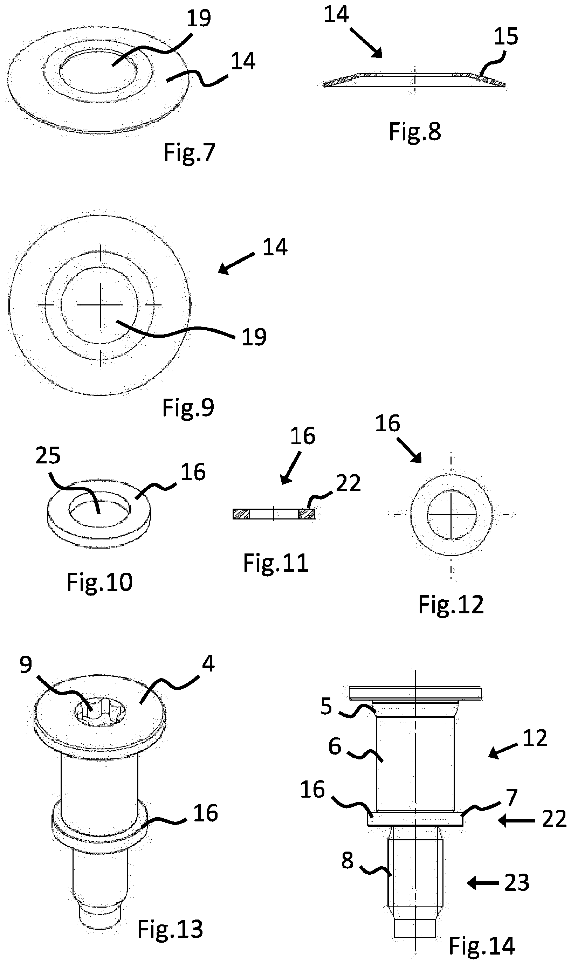

Im Folgenden wird eine erfindungsgemäße modulare Schraube 1 gemäß einem zweiten Ausführungsbeispiel näher beschrieben (Figuren 13 bis 16). Sofern nichts anderes beschrieben ist, weist die modulare Schraube 1 gemäß dem zweiten Ausführungsbeispiel dieselben technischen Merkmale wie die modulare Schraube 1 gemäß dem ersten Ausführungsbeispiel auf.

Bei der modularen Schraube 1 gemäß dem zweiten Ausführungsbeispiel ist im Gegensatz zum ersten Ausführungsbeispiel keine Spannscheibe 14 vorgesehen.

Die modulare Schraube 1 gemäß dem zweiten Ausführungsbeispiel weist demgemäß in Axialrichtung 2 den Schraubenkopf 4, den ersten und den zweiten Funktionsabschnitt 5, 6, die im vorliegenden Ausführungsbeispiel als ein einziger Funktionsabschnitt ausgebildet sind, den dritten Funktionsabschnitt 7 und den vierten Funktionsabschnitt 8 auf.

Der erste und der zweite Funktionsabschnitt 5 sind als Kompressionsbegrenzungsabschnitt 12 ausgebildet.

Im dritten Funktionsabschnitt 7, der als Kraftverteilungsabschnitt ausgebildet ist, ist die Unterlegscheibe 16 angeordnet und mit dem Schraubenschaft um die Längsachse drehbar gelagert verbunden. Entsprechend dem ersten Ausführungsbeispiel ist die Schraube in Axialrichtung ortsfest durch Anlage an dem vierten und an dem ersten und zweiten Funktionsabschnitt angeordnet.

Die Herstellung erfolgt analog zum ersten Ausführungsbeispiel vorzugsweise jedoch ohne Spannscheibe 16.

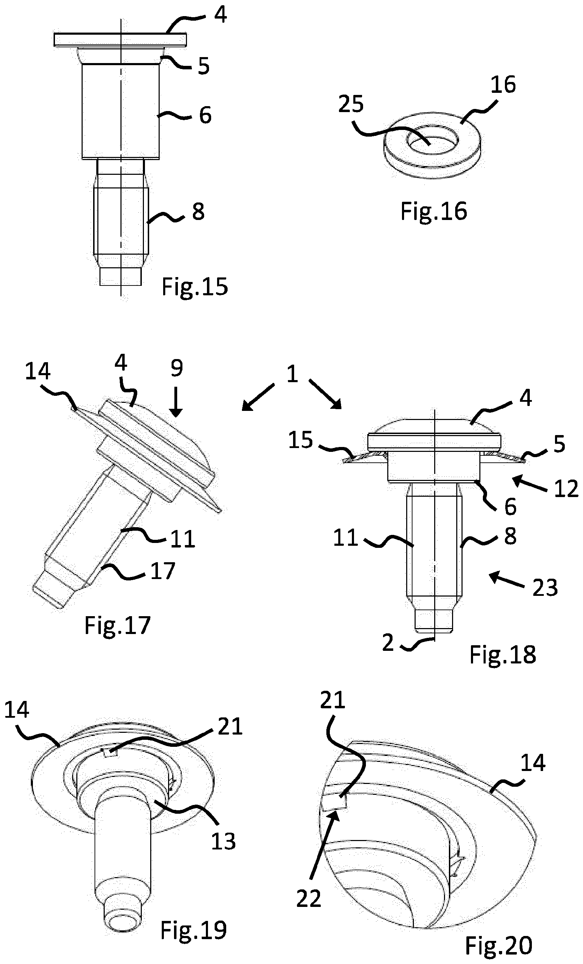

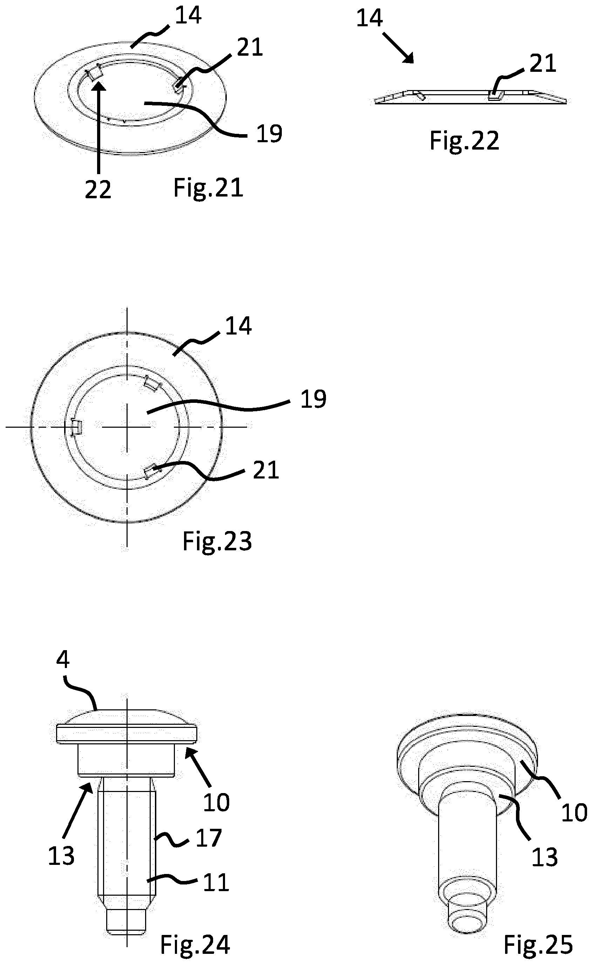

Im Folgenden wird eine erfindungsgemäße modulare Schraube 1 gemäß einem dritten Ausführungsbeispiel erläutert (Figuren 17 bis 25). Sofern nichts anderes beschrieben ist, weist die modulare Schraube 1 gemäß dem dritten Ausführungsbeispiel dieselben technischen Merkmale auf, wie die modulare Schrauben 1 gemäß dem ersten und dem zweiten Ausführungsbeispiel.

Die modulare Schraube gemäß dem dritten Ausführungsbeispiel umfasst in Axialrichtung 2 den Schraubenkopf 4 und einen entsprechenden Schraubenschaft 11.

Weiterhin weist die Schraube 1 in Axialrichtung 2 den ersten Funktionsabschnitt 5, den zweiten Funktionsabschnitt 6, und den vierten Funktionsabschnitt 8 auf.

Im ersten Funktionsabschnitt 5, der als Vorspannabschnitt 15 ausgebildet ist, ist gemäß dem ersten Ausführungsbeispiel eine Spannscheibe 14 angeordnet.

Die Schraube 1 und die Spannscheibe 14 können gemäß dem ersten Ausführungsbeispiel gestellt sein.

Alternativ ist gemäß dem dritten Ausführungsbeispiel vorgesehen, dass die Spannscheibe 14 Verbindungsmittel 21 aufweist, über die die Spannscheibe mittels Reib- und/oder Formschluss ortsfest mit dem Schaft 11 verbunden ist.

Die Spannscheibe ist als Tellerfeder ausgebildet und weist eine Durchgangsöffnung 19 auf.

In der Durchgangsöffnung 19 sind drei, sich in radialer Richtung 20 nach innen in Richtung Längsachse 3 ersteckende Verbindungsmittel 21 radial umlaufend und gleich beabstandet voneinander angeordnet.

Die Verbindungsmittel sind als Laschen 21 ausgebildet, die entlang einer Kreisrichtung verlaufende Kontaktkanten 22 aufweisen. Die Kontaktkanten 22 der Verbindungsmittel 21 verbinden die Spannscheibe 14 mittels Reibschluss mit dem Schraubenschaft im Bereich des ersten Funktionsabschnitts.

Die Spannscheibe 14 kann gemäß diesem Ausführungsbeispiel mittels Pressen mit dem Schraubenschaft 11 verbunden sein.

### Bezugszeichenliste

- 1: Schraube
- 2: Axialrichtung
- 3: Längsachse
- 4: Schraubenkopf
- 5: erster Funktionsabschnitt
- 6: zweiter Funktionsabschnitt
- 7: dritter Funktionsabschnitt
- 8: vierter Funktionsabschnitt
- 9: Antrieb
- 10: Anschlagfläche
- 11: Schraubenschaft
- 12: Kompressionsbegrenzungsabschnitt
- 13: Anschlagfläche
- 14: Spannscheibe
- 15: Vorspannabschnitt
- 16: Unterlegscheibe
- 17: Außengewinde
- 18 19: Durchgangsöffnung
- 20: Radiale Richtung
- 21: Verbindungsmittel
- 22: Kontaktkante
- 23: Kraftübertragungsabschnitt
- 24: Gewindeabschnitt
- 25: Durchgangsöffnung

## Patentansprüche

1. Modulare Schraube (1), wobei die Schraube (1) in einer Axialrichtung (2) die folgenden Elemente umfasst
einen Schraubenkopf (4),
einen Schaft mit
einem ersten Funktionsabschnitt (5) in dem eine Spannscheibe (14) angeordnet ist, sodass des erste Funktionsabschnitt (5) einen Vorspannabschnitt (15) ausbildet, einem zweiten Funktionsabschnitt (6),
einem dritten Funktionsabschnitt (7), zum Verteilen einer Vorspannkraft, und
einem vierten Funktionsabschnitt (8) mit einem Außengewinde (17), **dadurch gekennzeichnet dass** im dritten Funktionsabschnitt (7) eine Unterlegscheibe (16) angeordnet ist, die um eine Längsachse (3) der Schraube (1) drehbar gelagert ist, und dass die Unterlegscheibe (16) in Axialrichtung (2) durch Anlage an dem zweiten und dem vierten Funktionsabschnitt (6, 8) in etwa ortsfest festgelegt ist.

2. Modulare Schraube (1) gemäß Anspruch 1,
**dadurch gekennzeichnet,**
**dass** die Spannscheibe (14) als Tellerfeder ausgebildet ist und mit dem Schaft ortsfest verbunden und festgelegt ist.

3. Modulare Schraube (1) gemäß Anspruch 1 oder 2,
**dadurch gekennzeichnet,**
**dass** der zweite Funktionsabschnitt (6) ein Kompressionsbegrenzungsabschnitt (12) ist, dessen Durchmesser vorzugsweise größer als ein Durchmesser des Außengewindes (17) ist.

4. Modulare Schraube (1) gemäß einem der Ansprüche 1 bis 3,
**dadurch gekennzeichnet,**
**dass** die Unterlegscheibe (16) einen größeren Durchmesser aufweist als der zweite Funktionsabschnitt (6).

5. Modulare Schraube (1) gemäß einem der Ansprüche 1 bis 4,
**dadurch gekennzeichnet,**
**dass** eine Länge des zweiten Funktionsabschnittes (6) und des dritten Funktionsabschnittes (7) in axialer Richtung kleiner einer Höhe einer Durchgangsöffnung (19) eines Bauteils in axialer Richtung ist in dem die Schraube (1) anordbar ist.

6. Modulare Schraube (1) gemäß einem der Ansprüche 1 bis 5,
hergestellt durch
Pressen des Schraubenkopfes (4) und des Schaftes in einer Pressmaschine, Aufbringen von Unterlegscheibe (16) und/oder Spannscheibe (14) auf den Schaft vorzugsweise in einer Walzmaschine, und
Walzen des Außengewindes (17) in der Walzmaschine.

7. Modulare Schraube (1) gemäß einem der Ansprüche 1 bis 6,
**dadurch gekennzeichnet,**
**dass** die Spannscheibe (14) ein Verbindungsmittel (21) aufweist über das die Spannscheibe (14) mittels Reib- und oder Formschluss ortsfest mit dem Schaft verbunden ist, wobei das Verbindungsmittel (21), zum Bereitstellen einer reibschlüssigen Verbindung ausgebildet ist.

8. Modulare Schraube (1) gemäß Anspruch 7,
**dadurch gekennzeichnet,**
**dass** die Spannscheibe (14) eine Durchgangsöffnung (19) aufweist, wobei das Verbindungsmittel (21) als sich von einem Rand der Durchgangsöffnung (19) in radialer Richtung nach innen in Richtung Längsachse (3) gerichtete Laschen mit Haltekanten ausgebildet ist.

9. Verfahren zum Herstellen einer Schraube (1), nach einem der Ansprüche 1 bis 8, umfassend die folgenden Schritte,
Pressen eines Schraubenkopfes (4) und eines Schaftes in einer Pressmaschine,
Aufbringen einer Spann und einer Unterlegscheibe (14, 16) in einer Zuführeinrichtung einer Walzmaschine, und
Walzen eines Außengewindes (17) in der Walzmaschine.

## Claims

1. A modular screw (1), wherein the screw (1) comprises, in an axial direction (2), the following elements:
a screw head (4),
a shank having
a first functional portion (5) in which a clamping disk (14) is arranged,
so that the first functional portion (5) forms a prestressing portion (15),
a second functional portion (6),
a third functional portion (7) for distributing a prestressing force, and
a fourth functional portion (8) having an external thread (17), **characterized in that** a washer (16) is arranged in the third functional portion (7), being rotatably supported about a longitudinal axis (3) of the screw (1), and that
the washer (16) is fixed in an approximately stationary manner in the axial direction (2) by abutting the second and fourth functional portions (6, 8).

2. The modular screw (1) according to claim 1,
**characterized in that**
the clamping disk (14) is configured as a plate spring and is connected and fixed to the shaft in a stationary manner.

3. The modular screw (1) according to claim 1 or 2,
**characterized in that**
the second functional portion (6) is a compression-limiting portion (12), whose diameter is preferably larger than a diameter of the external thread (17).

4. The modular screw (1) according to any one of claims 1 to 3, **characterized in that**
the washer (16) has a larger diameter than the second functional portion (6).

5. The modular screw (1) according to any one of claims 1 to 4, **characterized in that**
a length of the second functional portion (6) and of the third functional portion (7) in the axial direction is less than a height in the axial direction of a through-opening (19) of a component in which the screw (1) can be arranged.

6. The modular screw (1) according to any one of claims 1 to 5, produced by
pressing the screw head (4) and the shank in a pressing machine, applying the washer (16) and/or clamping disk (14) to the shank, preferably in a rolling machine, and
rolling the external thread (17) in the rolling machine.

7. The modular screw (1) according to any one of claims 1 to 6, **characterized in that**
the clamping disk (14) comprises a connecting means (21) via which the clamping disk (14) is connected to the shank in a stationary manner by means of frictional and/or form-fitting engagement, wherein the connecting means (21) is designed to provide a frictional connection.

8. The modular screw (1) according to claim 7,
**characterized in that**
the clamping disk (14) has a through-opening (19), wherein the connecting means (21) takes the form of tabs with retaining edges, said tabs being directed from an edge of the through-opening (19) in the radial direction inwardly in the direction of the longitudinal axis (3).

9. A method for producing a screw (1) according to any one of claims 1 to 8,
comprising the following steps:
pressing a screw head (4) and a shank in a pressing machine,
applying a clamping disk and a washer (14, 16) in a feeding device of a rolling machine, and
rolling an external thread (17) in the rolling machine.

## Revendications

1. Vis modulaire (1), dans laquelle la vis (1) comprend, dans une direction axiale (2), les éléments suivants :
une tête de vis (4),
une tige ayant
une première partie fonctionnelle (5) dans laquelle un disque de serrage (14) est agencé,
de sorte que la première partie fonctionnelle (5) forme une partie de précontrainte (15),
une deuxième partie fonctionnelle (6),
une troisième partie fonctionnelle (7) pour la distribution d'une force de précontrainte, et
une quatrième partie fonctionnelle (8) ayant un filetage externe (17), **caractérisée en ce qu'**une rondelle (16) est agencée dans la troisième partie fonctionnelle (7), étant supportée de manière rotative autour d'un axe longitudinal (3) de la vis (1), et que
la rondelle (16) est fixée d'une manière approximativement fixe dans la direction axiale (2) en aboutant les deuxième et quatrième parties fonctionnelles (6, 8).

2. Vis modulaire (1) selon la revendication 1,
**caractérisée en ce que**
le disque de serrage (14) se présente sous la forme d'un ressort à lame et est relié et fixé à l'arbre de manière fixe.

3. Vis modulaire (1) selon la revendication 1 ou 2,
**caractérisée en ce que**
la deuxième partie fonctionnelle (6) est une partie de limitation de compression (12), dont le diamètre est de préférence supérieur à un diamètre du filetage externe (17).

4. Vis modulaire (1) selon l'une quelconque des revendications 1 à 3,
**caractérisée en ce que**
la rondelle (16) a un diamètre supérieur à la deuxième partie fonctionnelle (6).

5. Vis modulaire (1) selon l'une quelconque des revendications 1 à 4,
**caractérisée en ce que**
une longueur de la deuxième partie fonctionnelle (6) et de la troisième partie fonctionnelle (7) dans la direction axiale est inférieure à une hauteur dans la direction axiale d'une ouverture traversante (19) d'un composant dans lequel la vis (1) peut être agencée.

6. Vis modulaire (1) selon l'une quelconque des revendications 1 à 5,
produit par
le pressage de la tête de vis (4) et de la tige dans une machine de pressage, l'application de la rondelle (16) et/ou du disque de serrage (14) sur la tige, de préférence dans une machine à rouler, et
le roulage du filetage externe (17) dans la machine à rouler.

7. Vis modulaire (1) selon l'une quelconque des revendications 1 à 6,
**caractérisée en ce que**
le disque de serrage (14) comprend un moyen de liaison (21) par lequel le disque de serrage (14) est relié à la tige de manière fixe au moyen d'un engagement par friction et/ou par ajustement de forme, dans lequel le moyen de liaison (21) est conçu pour fournir une connexion par friction.

8. Vis modulaire (1) selon la revendication 7,
**caractérisée en ce que**
le disque de serrage (14) présente une ouverture de passage (19), dans lequel le moyen de liaison (21) prend la forme de languettes avec des bords de retenue, lesdites languettes étant dirigées à partir d'un bord de l'ouverture de passage (19) dans la direction radiale vers l'intérieur dans la direction de l'axe longitudinal (3) .

9. Procédé de fabrication d'une vis (1) selon l'une quelconque des revendications 1 à 8,
comprenant les étapes suivantes :
le pressage d'une tête de vis (4) et d'une tige dans une machine de pressage,
l'application d'un disque de serrage et d'une rondelle (14, 16) dans un dispositif d'alimentation d'une machine à rouler, et
le roulage d'un filetage externe (17) dans la machine à rouler.
